# EUROPEAN PATENT APPLICATION

(11) **EP 1 334 808 A2**
(43) Date of publication of application: **13.08.2003**
(21) Application number: 03250854.1
(22) Date of filing: 12.02.2003
(51) Int. Cl.: B25J 17/02, B62D 57/032, F16D 11/06

(54) **Backlash clutch and joint mechanism for a robot comprising the clutch**

(30) Priority: 12.02.2002 JP 2002034076
(71) Applicant: The University of Tokyo, Bunkyo-Ku, Tokyo (JP)
(72) Inventor: Nakamura, Yoshihiko, Tokyo (JP); Okada, Masafumi, Tokyo (JP); Goto, Tatsuya, Kobe City, Hyogo Pref. (JP)
(74) Representative: Fenlon, Christine Lesley

(57) **Abstract**

A backlash clutch comprising first rotation member (3) and a second rotation member (4), each of which are provided rotatably on an identical axis, and are engaged together in a rotating direction of the members by contacting each radial extension surface (3a, 4a). A gap d exists between said radial extension surface of the first and the second rotation members (3a, 4a) at the rotating direction of the members.

## Description

The present invention relates to a backlash clutch that realizes a high torque transmission characteristic and free joint mechanism. This invention also relates to a free joint mechanism for a robot comprising the clutch.

Generally, in a clutch mechanism, connection and disconnection for transmitting driving force are achieved by means of a friction mechanism. Such a friction mechanism comprises rotating members that are joined together by frictional function acts between the members to control the on-off action of the clutch. In such a clutch mechanism, using frictional action it has been difficult to transmit the force when the force is large because slippage arises at the clutch mechanism transmits a driving force.

This phenomenon generates a significant problem when a clutch mechanism applies to a knee joint of a humanoid robot. Typically, in a humanoid robot, such a joint mechanism provided in the body is driven by controlling actuators to generate objective paths. Especially, there is used an actuator which generates high power to the knee joint.

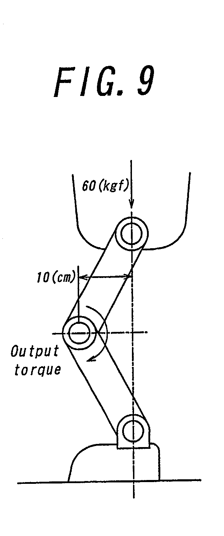

When the humanoid robot rests with the posture shown at FIG. 9, assuming that the weight of the upper part from the articulatio coxae is 60kgf and the offset length from the articulatio coxae to the knee joint is 10cm, under the acceleration of gravity is 9.81m/s², there is required that the actuator drives the knee joint which must output high torque such as 58.86Nm. Therefore, the knee joint mechanism must have a capability to transmit such a high torque.

In general, the knee joint mechanism is composed from a motor generating high power and reduction gears with a high gear ratio. On the other hand, in a human's walking motion, the knee joint of a leg acts as a free joint when the leg is not grounding. It is contemplated that such an action of the knee joint has the following effects;
- There is no need to use extra force.
- When a human moves forward a leg, the knee of the leg moves freely in accordance with an inertial force.
- When the leg touches down, an impulsive force acts on the leg that is eased up because the leg will head for ground at an adequate angle, naturally.
However, the present knee joint mechanism has difficulties to realize a free joint following a reactive force, where the walking motion is performed to control maintaining the knee with a controlled desired angle when the leg is not grounding.

To ensure that the knee joint has such a free moving condition, it is contemplated to incorporate a clutch mechanism into the reduction gears. However, a general clutch mechanism is a friction using type such as the above-mentioned clutch, it generates slip at high torque, so that it is difficult to transmit high torque. Therefore, the clutch mechanism can only be attached to the input shaft side of the reduction gears. Consequently, the knee joint of a humanoid robot needs a clutch mechanism that can provide to output on the shaft side of the reduction gears as a mechanism that can achieve both to transmit high torque and to maintain a free moving condition.

Preferred embodiments of the present invention seek to provide a clutch mechanism possible to transmit high torque and maintain a free moving condition, and a joint mechanism of a robot comprising such a clutch mechanism. Especially, this clutch mechanism seeks to realize a walking motion and has the following advantages when it is used as a knee joint;
(1) Transmit a large driving force
(2) Achieving a free joint,
   (a) Needs not to use extra force.
   (b) Realize free motion
   (c) Absorbing an impulsive force at landing

A backlash clutch embodying the present invention comprises a first rotation member and a second rotation member, each of which is provided rotatably on an identical axis, and is engaged together in a rotating direction of the members by contacting each radial extension surface, a gap between said radially extension surfaces of the first and the second rotation members in the rotating direction of the members.

According to this backlash clutch, the relative rotation of the first and second rotation member which rotate until the gap between said radial extension surfaces of these rotation members in the rotating direction of these members is a backlash, this backlash is advantageously able to achieve the following effects;
(a) Achieve a free joint.
(b) Transmit a high torque when the clutch is in a coupled condition.

A joint mechanism for a robot comprising the backlash clutch according to Claim 1, two composing members form an arm or a leg of a robot and are connected together rotatably, one of the composing members supports one of said first and second rotation members rotatably at the rotation axis of the composing member, another one of the composing members fixes the other one of said first and second rotation members, and, the joint mechanism further comprising a drive means driving one of said first and second rotation members rotatably relative to the composing member which supports said rotation members rotatably.

According to this a joint mechanism for a robot comprising such a backlash clutch, the following effects can be obtained:
(c) Realize a reaction force-following the mechanism follows the reaction force by a free joint.
(d) Absorb impulsive force by means of the reaction force following the motion of the reaction force-following mechanism.
(e) Avoid consumption of unprofitable energy.

For a better understanding of the present invention, and to show how the same may be carried into effect, reference will now be made, by way of example to the accompanying drawings, in which:

FIG. 1 is a schematic front view showing a knee joint mechanism of a humanoid robot as one embodiment of the backlash clutch and the robot comprising the clutch according to the present invention;

FIG. 2 is a schematic diagram of the knee joint mechanism shown in FIG. 1, which transmits torque at the peripheral gap between the radial extension surfaces of the first and the second rotation members and is zero;

FIG. 3 is a schematic diagram of the knee joint mechanism shown in FIG. 1 and 2, showing that the joint is in a free joint condition;

FIG. 4 is a relation diagram of the knee joint mechanism shown in FIG. 1 - 3, showing a preferable example of control to make the joint mechanism in a free joint condition;

FIG. 5a is a schematic diagram showing a leg of a humanoid robot that intends to ground, and FIG. 5b is a schematic view of part A of FIG. 5a enlarged;

FIG. 6a is a schematic diagram showing an action of the knee joint mechanism embodying the present invention when a leg of a humanoid robot intends to grounding, and FIG. 6b is a schematic view of part B of FIG. 6a enlarged.

FIG. 7 is a schematic diagram showing a motion of a leg of humanoid robot after the leg is raised from the floor as a rear foot;

FIG. 8 is a schematic diagram showing a further motion of a leg in FIG. 7; and

FIG. 9 is a schematic diagram showing a pose of the humanoid robot when the robot bends its knee.

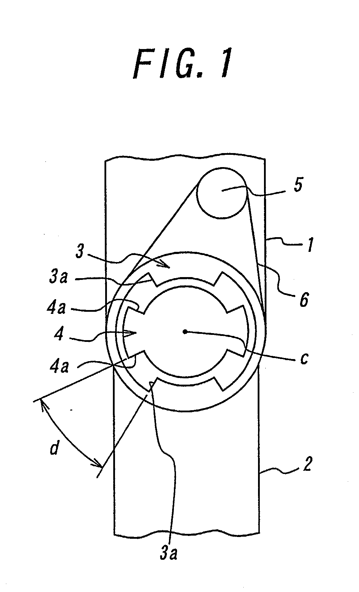

The present invention will be further explained below with reference to a preferred embodiment shown in the accompanying drawings. FIG. 1 is a schematic front view showing a knee joint mechanism of humanoid robot as one embodiment of the backlash clutch and the robot comprising the clutch according to the present invention. In FIG. 1, numeral 1 represents an upper part of a leg as one member and consists of one leg of a humanoid robot, numeral 2 represents a lower part of a leg as another part of the member consists of said leg, and this lower part of leg is rotatably connected together with upper part of leg around the axis C. Numeral 3 represents a first rotation member and consists of a backlash clutch of the embodiment of this invention; numeral 4 represents a second rotation member and consists of a backlash clutch of the embodiment of this invention. Numeral 5 represents a pulley provided to output a shaft of high output power motor with reduction gears, and numeral 6 represents a belt.

In this knee joint mechanism, first rotation member 3 and second rotation member 4 are located on identical axis C to be able to rotate relatively, first rotation member 3 is rotatably supported by upper part of leg 1 around the axis C, second rotation member 4 is fixedly integrated with lower part of leg 2. Furthermore, first rotation member 3 and second rotation member 4 have radial extension surfaces 3a, 4a, respectively, and both surfaces contact each other, and a gap (backlash) is formed between said rotation members at the direction of said rotation members.

Additionally, a belt transmission mechanism using a high power output motor with reduction gears having said pulley 5, pulley 5 and said belt 6 consists of a drive means, and said first and second rotation members, said motor and said drive means consists of a said knee joint mechanism of the embodiment. In this embodiment, said drive means is configured by transmitting output power of said motor to said first rotation member 3 via pulley 5 and belt 6, however, the drive means of the knee joint mechanism for robot of this invention is not limited to the aforementioned drive means.

The backlash clutch and the knee joint mechanism for a robot of this embodiment, transmit rotation and realize a free condition are achieved by the following procedure.

### (1) Transmit driving force

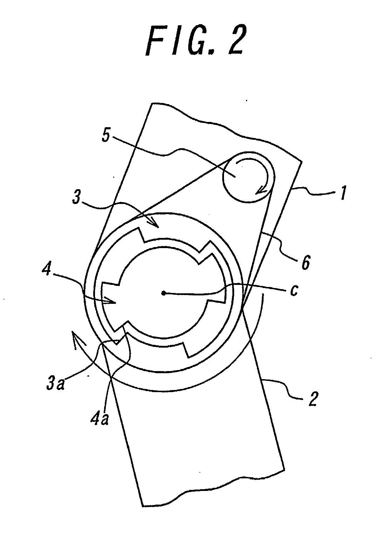

In this joint mechanism, as shown in FIG. 2, torque is transmitted to the direction represented by the arrow in the drawing by means of setting the peripheral gap d between the radial extension surface 3a of the first rotation member 3 and the radial extension surface 4a of the second rotation member 4 as zero (for convenience, this gap was depicted to exist slightly between said surfaces). In this case, the first rotation member 3 and second rotation member 4 lead to make surface contact by contacting radial extension surfaces 3a, and 4a to each other so that the surfaces are perpendicular to the direction of the rotating force so that these members ensure to transmit large torque. In this joint mechanism, since the direction of transmitting the driving force is in one way, response with a time lag arises if this mechanism uses a servomechanism to control the rotation angle. However, in this mechanism such as a knee joint of a humanoid robot, said rotating force always acts to a constant direction so that this joint mechanism is performed effectively. This joint mechanism is suited to maintain the pose of a condition of bending the knee to transmit a high torque as shown in FIG. 9.

### (2) Realize free moving condition

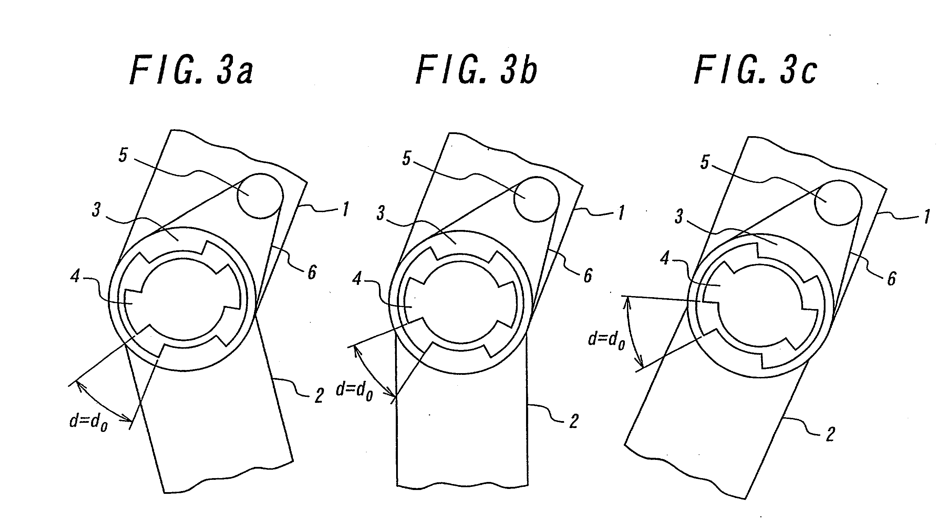

In such a joint mechanism, as shown in FIG. 3a - 3c, for example, joint at free condition is realized by controlling the rotation angle of the first rotation member 3 to maintain the gap d to the constant value do adapted to rotation of the second rotation member 4 caused by a swing of the lower part of leg 2. In general, an actuator with reduction gears having high gear ratio to output a high torque cannot generate a revolving speed as much as maintain the gap d to a constant value against free motion of the lower part of leg 2. However, this joint mechanism of this invention is able to realize a free condition of leg because this joint has a margin of gap corresponding to the value of backlash. That is, if the rotation angle of the upper part of leg is θ, rotation angle of the lower part of leg is φ; angle of gap for the direction of rotation is ψ, if θ is controlled to satisfy the equation${\text{θ · φ = ψ < ψ}}_{\text{0}}$ for predetermined angle (backlash) ψ₀, a free joint is realized.

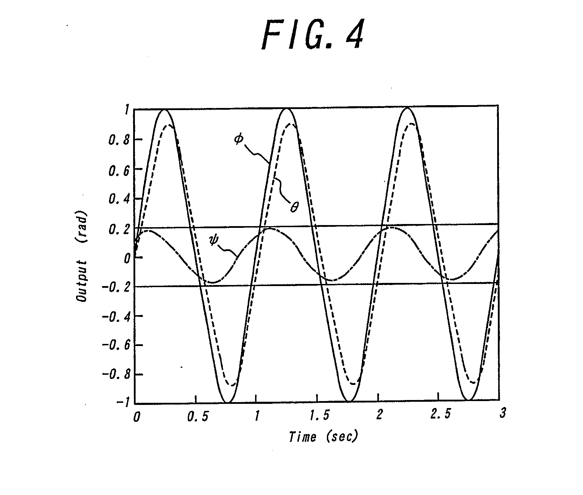

For example, an exemplary control shown in FIG. 4, amplitude of θ is small by comparison with rotation angle of φ, and the value of amplitude of θ follows that of φ with phase retardation. However, the value ψ which is difference value between θ and φ is within ψ₀ (=±0.2 radian), so that free moving joint condition has been realized.

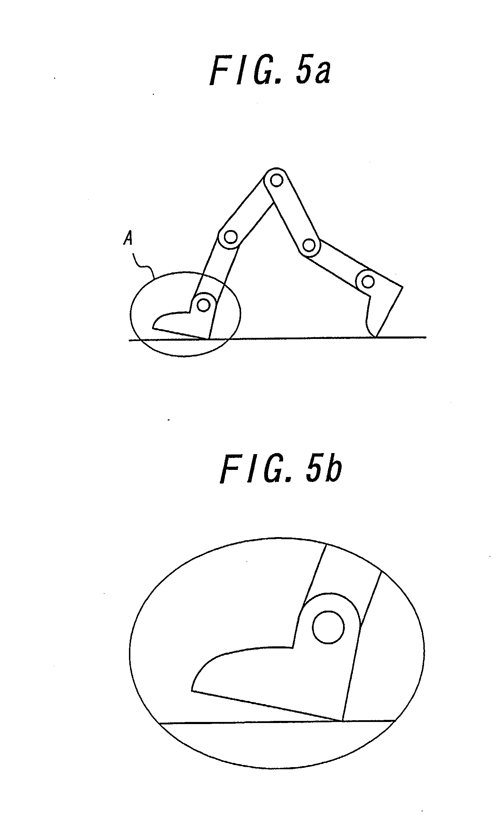

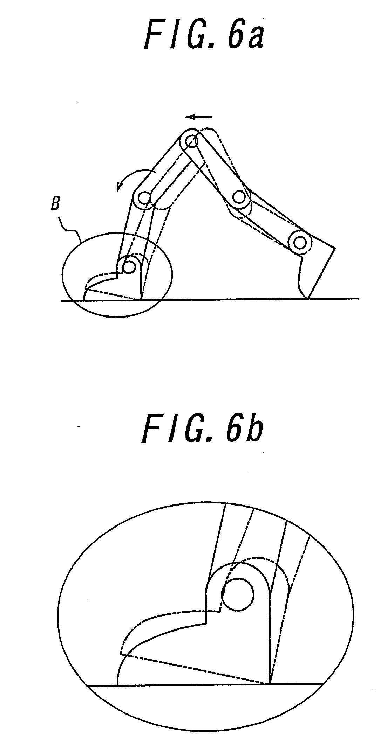

According to above-mentioned backlash clutch of the embodiment, realizing a free joint by incorporating this clutch to a knee joint of a human robot, impact shock act on leg at grounding as following reasons. That is, suppose, as shown in FIG. 5a, the leg that is not grounding goes in for grounding. In this time, as shown in FIG. 5b, the bottom of the leg will make a line contact with the floor. If the knee joint is controlled by a high output actuator and to perform a desired rotation angle, a large impact force generated and act on the grounding line made by contact of the leg and the ground, so that the leg is raised by repulsive force from the floor when the floor or the bottom of the leg is made from hard material. On the other hand, if a free joint is applied to the knee joint, the knee joint will perform the motion following a repulsive force from the floor (repulsive force following motion) shown in FIG. 6a, and the bottom of the leg will ground by achieving surface contact with the floor. Thus, the effect to absorb impulsive force from the floor is obtained.

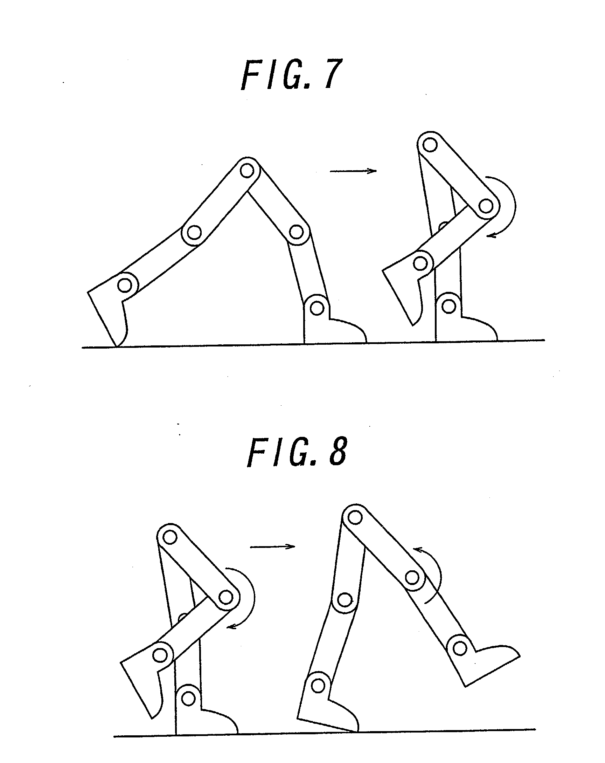

On the other hand, a when a leg (right leg of the humanoid robot in drawing) which is not grounding makes a heel to the floor, the leg creates the following paths.
(1) At first, a femoral area of the leg is raised so as to the leg will not contact the ground, and the knee is bent as shown in FIG. 7,
(2) Second, the knee is held out in order to pull up the leg.
Generally, in an adequately controlled knee joint, the above-mentioned bending and pulling up motion is controlled by the controlling rotation angle of the knee joint, and this joint represents desired paths given by the designer. However, since this motion of a knee joint is essentially natural motion that is generated by gravity and inertial force, it is generated automatically by making this knee joint to have free motion. Consequently, it is understood that the effective walking motion of a humanoid robot without extra force is achieved by realizing a free joint.

According to the backlash clutch of this embodiment, by using this clutch, the following advantageous effect is obtained:
(a) Achieve a free joint.
(b) Transmit a high torque when the clutch is in a coupled condition. Moreover, according to the knee joint mechanism for a robot of this embodiment, the following advantageous effects are obtained:
(c) Realize a reaction force-following the mechanism follows the reaction force by a free joint.
(d) Absorb impulsive force by means of the reaction force following motion of the reaction force-following mechanism.
(e) Avoid consumption of unprofitable energy.

While the present invention has been described above with reference to a specific embodiment shown in the accompanying drawings, this invention is not limited by the above-mentioned embodiment.
In the mechanism of this invention it can be constructed that the first rotation member can be integrally fixed to the upper part of leg and the second rotation member to be rotatably supported by the lower part of leg and to be driven by the driving means. And in this embodiment, the second rotation member is located inside of the first rotation member, and each of the radial extension surfaces of these members are configured at the convexity part provided in their inner surface of the first rotation member and the outer surface of the second rotation member respectively. Alternatively, the first and second rotation members may be located parallel to the direction of axis for rotation, and their radial extension surfaces may be formed at the convexity part provided on the surface of the members that face each other.

Furthermore, this backlash clutch of the present invention can apply to the mechanism except for the joint of a robot, and the joint mechanism for a robot can be used to realize a free swing motion of an arm of a robot except for a leg of a humanoid robot.

## Claims

1. A backlash clutch comprising:
a first rotation member and a second rotation member, each of which are provided rotatably on an identical axis, and are engaged together in a rotating direction of the members by contacting each radial extension surface, wherein,
a gap between said radially extension surfaces of the first and the second rotation members at the rotating direction of the members.

2. A joint mechanism for a robot comprising the backlash clutch according to Claim 1, wherein,
two composing members form an arm or a leg of a robot and are connected together rotatably,
one of the composing members is supporting one of said first and second rotation members rotatably at the rotation axis of the composing member,
another one of the composing members fixes the other one of said first and second rotation members, and,
the joint mechanism further comprises a drive means driving one of said first and second rotation members rotatably relative to the composing member which supports said rotation member rotatably.
